(19)

Europäisches
Patentamt
European
Patent Office
Office européen
des brevets

(11) **EP 2 787 704 B1**

(12) **EUROPÄISCHE PATENTSCHRIFT**

(45) Veröffentlichungstag und Bekanntmachung des Hinweises auf die Patenterteilung:
**07.12.2016 Patentblatt 2016/49**

(51) Int Cl.:
***H04L 25/02*** *(2006.01)*

(21) Anmeldenummer: **14162358.7**

(22) Anmeldetag: **28.03.2014**

(54) **Umsetzeranordnung**

Transfer assembly

Système de convertisseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2013 DE 102013103362**

(43) Veröffentlichungstag der Anmeldung:
**08.10.2014 Patentblatt 2014/41**

(73) Patentinhaber: **eesy-ic GmbH**
**90449 Nürnberg (DE)**

(72) Erfinder: **Wickmann, Andreas**
**90425 Nürnberg (DE)**

(74) Vertreter: **Patentship**
**Patentanwaltsgesellschaft mbH**
**Elsenheimerstaße 65**
**80687 München (DE)**

(56) Entgegenhaltungen:
**US-A1- 2004 161 024     US-A1- 2011 184 675**
**US-B1- 7 675 444**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Umsetzeranordnung mit einer galvanisch getrennten ersten und zweiten Seite und ein Umsetzungsverfahren.

In vielen elektrischen Anwendungen, wie beispielsweise bei einem Motorantrieb, einem Solarinverter oder einer Stromversorgung, wird aufgrund der auftretenden hohen Spannungen eine isolierte Strom- oder Spannungsmessung benötigt. Hierbei können jedoch die Bezugspotentiale des Sensors und der Auswertschaltung unterschiedlich sein. Daher wird eine galvanische Isolierung zwischen einer Hochspannungsseite und einer Niederspannungsseite der Messstrecke verwendet.

Da digitale Signale störunempfindlicher sind und leichter übertragen werden können, kommen in derartigen Sensoren Analog-Digital-Umsetzer (ADU) zum Einsatz, die das analoge Eingangssignal digitalisieren. Bei einer Übertragung der erzeugten digitalen Signale über die galvanische Isolierung hinweg kann es zu einer Störung der Daten kommen, beispielsweise durch eine Kopplung der jeweiligen Bezugspotentiale.

Die Druckschrift US 2011/0184675 A1 betrifft eine Leistungsmessung mit einem isolierten Analog-zu-Digital-Umsetzer. Der Analog-zu-Digital-Umsetzer ist zusammen mit einem Kodierer/Dekodierer-Modul und einer Schnittstelle in einem leitungsseitigen Gerät angeordnet.

Die Druckschrift US 2004/0161024 A1 betrifft ein Isolationssystem mit einem Transmissionssystem und einem Empfangssystem, welche über eine Isolationsbarriere getrennt sind. Hierbei weist das Transmissionssystem einen Analog-zu-Digital-Umsetzer und eine Codiererschaltung auf.

Die Druckschrift US 7,675,444 B1 betrifft eine Schaltung zum Transferieren eines Signals über eine Isolationsbarriere. Die Schaltung umfasst einen Sigma-Delta-Modulator und einen Manchester-Codierer.

Es ist die der Erfindung zugrundeliegende Aufgabe, eine Umsetzeranordnung und ein Verfahren zur Umsetzung anzugeben, bei dem eine Signalübertragung über eine Isolationsbarriere hinweg schnell und störungsfrei durchgeführt werden kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Umsetzeranordnung mit einer ersten Seite und einer zweiten Seite gelöst, die durch eine Isolationsbarriere galvanisch voneinander getrennt sind, mit einem Analog-Digital-Umsetzer auf der ersten Seite zum Ausgeben eines ersten Signals; einem Kodierer auf der ersten Seite zum Kodieren des ersten Signals in ein redundantes zweites Signal; einer Sendeinrichtung auf der ersten Seite zum Senden des redundanten zweiten Signals über die Isolationsbarriere; einer Empfangseinrichtung auf der zweiten Seite zum Empfangen des über die Isolationsbarriere gesendeten, redundanten zweiten Signals; und einem Störungserfasser zum zeitlichen Erfassen einer Spannungsflanke an dem Analog-Digital-Umsetzer. Die erste Seite kann beispielsweise eine Hochspannungsseite sein und die zweite Seite kann eine Niederspannungsseite sein. Die Umsetzeranordnung kann innerhalb eines Messsensors implementiert sein. Das redundante zweite Signal ist ein Signal, das die Information des ersten Signals in redundanter, mehrfacher Weise umfasst. Das erste Signal und das zweite Signal kann ein digitales Signal sein. Dadurch wird beispielsweise der technische Vorteil erreicht, dass Fehler bei der Übertragung über die Isolationsbarriere hinweg korrigiert werden können.

In einer vorteilhaften Ausführungsform der Umsetzeranordnung ist der Kodierer ausgebildet, ein redundantes zweites Signal zu erzeugen, das ein erstes Kodiersignal und ein gegenüber dem ersten Kodiersignal zeitversetztes zweites Kodiersignal umfasst. Das erste und das zweite Kodiersignal umfassen die gleiche Information über das erste Signal. Dadurch wird beispielsweise der technische Vorteil erreicht, dass auf einfache Weise eine Redundanz des zweiten Signals erzeugt wird und eine zu einem bestimmten Zeitpunkt auftretende Gleichtaktstörung lediglich die jeweilige Information eines einzigen der beiden Kodiersignale betrifft.

In einer weiteren vorteilhaften Ausführungsform der Umsetzeranordnung ist der Kodierer ausgebildet, das erste Signal mit einem fehlerkorrigierenden Code in ein redundantes zweites Signal zu kodieren. Durch den fehlerkorrigierenden Code werden beispielsweise Kontrollbits in das zweite Signal eingesetzt. Dadurch wird beispielsweise der technische Vorteil erreicht, dass das zweite Signal auf effiziente Art und Weise erzeugt und überprüft werden kann.

In einer weiteren vorteilhaften Ausführungsform der Umsetzeranordnung umfasst die Umsetzeranordnung eine Vergleichseinrichtung zum Vergleichen des ersten Kodiersignals und des zweiten Kodiersignals. Dadurch wird beispielsweise der technische Vorteil erreicht, dass Abweichungen aufgrund einer Störung bei einer Datenübertragung erkannt werden können.

In einer weiteren vorteilhaften Ausführungsform der Umsetzeranordnung sind die Sendeinrichtung und die Empfangseinrichtung optisch, induktiv, magnetisch oder kapazitiv koppelbar. Dadurch wird beispielsweise der technische Vorteil erreicht, dass das zweite Signal auf besonders einfache und geeignete Art und Weise kontaktlos über die Isolationsbarriere hinweg übermittelt werden kann.

In einer weiteren vorteilhaften Ausführungsform der Umsetzeranordnung umfasst die Sendeeinrichtung eine Infrarotdiode und die Empfangseinrichtung eine Photodiode. Dadurch wird beispielsweise der technische Vorteil erreicht, dass das zweite Signal schnell über eine große Isolationsstrecke übermittelt werden kann.

In einer weiteren vorteilhaften Ausführungsform der Umsetzeranordnung umfasst die Sendeeinrichtung eine Spule und die Empfangseinrichtung einen Riesenmagnetowiderstandsensor. Dadurch wird beispielsweise der technische Vorteil erreicht, dass die Information besonders schnell übertragen werden kann.

In einer weiteren vorteilhaften Ausführungsform der Umsetzeranordnung umfasst die Sendeeinrichtung eine Sendespule und die Empfangseinrichtung eine Empfangsspule. Dadurch wird beispielsweise der technische Vorteil erreicht, dass ein einfacher induktiver Aufbau zum Übertragen des zweiten Signals verwendet wird.

In einer weiteren vorteilhaften Ausführungsform der Umsetzeranordnung umfasst die Sendeeinrichtung eine Sendeelektrode und die Empfangseinrichtung eine Empfangselektrode. Die Sendeelektrode und die Empfangselektrode bilden einen Kondensator zur kapazitiven Kopplung. Dadurch wird beispielsweise der technische Vorteil erreicht, dass ein einfacher kapazitiver Aufbau zum Übertragen des zweiten Signals verwendet wird.

In einer weiteren vorteilhaften Ausführungsform der Umsetzeranordnung umfasst der Analog-Digital-Umsetzer einen Delta-Sigma-Modulator. Dadurch wird beispielsweise der technische Vorteil erreicht, dass eine schnelle Umsetzung und eine Rauschformung realisiert werden können.

In einer weiteren vorteilhaften Ausführungsform der Umsetzeranordnung umfasst die Umsetzeranordnung auf der ersten Seite oder auf der zweiten Seite eine Taktsendeeinrichtung zum Senden eines Taktsignals über die Isolationsbarriere. Dadurch wird beispielsweise der technische Vorteil erreicht, dass eine Synchronisation der Übertragung mit dem Taktsignal realisiert werden kann.

In einer weiteren vorteilhaften Ausführungsform der Umsetzeranordnung umfasst die Umsetzeranordnung auf der ersten Seite oder der zweiten Seite eine Regelschleife zum Filtern des gesendeten Taktsignals. Dadurch wird beispielsweise der technische Vorteil erreicht, dass Übertragungsfehler bei der Übertragung des Taktsignals korrigiert werden können.

Die Umsetzeranordnung umfasst einen Störungserfasser zum zeitlichen Erfassen einer Spannungsflanke an dem Analog-Digital-Umsetzer. Dadurch wird beispielsweise der technische Vorteil erreicht, dass ermittelt werden kann, zu welchem Zeitpunkt eine Störung aufgetreten ist und die zum Zeitpunkt der Störung übertragene Information durch eine redundant übermittelte Information ersetzt werden kann.

Gemäß einem zweiten Aspekt der Erfindung wird die Aufgabe durch eine Schaltungsanordnung zum Erfassen einer Spannung mit einem Shunt-Widerstand und einer Umsetzeranordnung nach dem ersten Aspekt gelöst. Dadurch wird beispielsweise der technische Vorteil erreicht, dass eine besonders zuverlässige Strommessung bei Verwendung von Schaltelementen mit kurzen Schaltzeiten durchgeführt werden kann.

Gemäß einem dritten Aspekt der Erfindung wird die Aufgabe durch Verfahren zum Umsetzen analoger Eingangssignale in digitale Daten mittels einer Umsetzeranordnung mit einer ersten Seite und einer zweiten Seite gelöst, die durch eine Isolationsbarriere galvanisch voneinander getrennt sind, mit den Schritten eines Ausgebens eines ersten Signals mittels eines Analog-Digital-Umsetzers auf der ersten Seite; eines Kodierens des ersten Signals in ein redundantes zweites Signal mittels eines Kodierers auf der ersten Seite; eines Sendens des redundanten zweiten Signals über die Isolationsbarriere mittels einer Sendeeinrichtung auf der ersten Seite; und eines Empfangen des über die Isolationsbarriere gesendeten, redundanten zweiten Signals mittels einer Empfangseinrichtung auf der zweiten Seite. Zusätzlich kann das Verfahren den Schritt eines Dekodierens des zweiten Signals durch einen Dekodierer auf der zweiten Seite umfassen. Weiter kann das Verfahren die Schritte eines Korrigierens eines Übertragungsfehlers auf Basis des dekodierten zweiten Signals und eines zeitlichen Erfassens einer Spannungsflanke an dem Analog-Digital-Umsetzer mittels eines Störungserfassers umfassen. Dadurch wird beispielsweise ebenfalls der technische Vorteil erreicht, dass Fehler bei der Übertragung über die Isolationsbarriere hinweg korrigiert werden können.

In einer vorteilhaften Ausführungsform des Verfahrens umfasst das Verfahren den Schritt eines Erzeugens eines redundanten zweiten Signals, das ein erstes Kodierersignal und ein gegenüber dem ersten Kodierersignal zeitversetztes zweites Kodierersignal. Dadurch wird beispielsweise der technische Vorteil erreicht, dass auf einfache Weise eine Redundanz des zweiten Signals erzeugt wird und eine zu einem bestimmten Zeitpunkt auftretende Gleichtaktstörung lediglich die jeweilige Information eines einzigen Kodierersignals betrifft.

Das Verfahren umfasst den Schritt eines zeitlichen Erfassens einer Spannungsflanke an dem Analog-Digital-Umsetzer. Dadurch wird beispielsweise der technische Vorteil erreicht, dass der Zeitpunkt einer Störung bestimmt werden kann.

Ausführungsbeispiele der Erfindung sind in den Zeichnungen dargestellt und werden im Folgenden näher beschrieben.

Es zeigen:

Fig. 1 eine schematische Ansicht einer Schaltungsanordnung zum Messen eines Stromes in einer Motorsteueranwendung;

Fig. 2 ein Spannungsdiagramm einer Gleichtaktstörung;

Fig. 3 ein Blockdiagramm einer Umsetzeranordnung;

Fig. 4 ein Zeitdiagramm für eine Datenübertragung mit einer Taktfrequenz;

Fig. 5 ein Zeitdiagramm für eine Datenübertragung mit jeder Taktflanke der Taktfrequenz;

Fig. 6A ein Zeitdiagramm für eine doppelte Übertragung mit einer Verzögerung von 1.5 Taktzyklen;

Fig. 6B ein Zeitdiagramm für eine doppelte Übertragung mit einer Verzögerung von 0.5 Taktzyklen;

Fig. 7 ein Blockdiagramm eines Dekodierers;

Fig. 8 eine Implementierung eines Störungserfassers; und

Fig. 9 ein Blockdiagramm des Verfahrens.

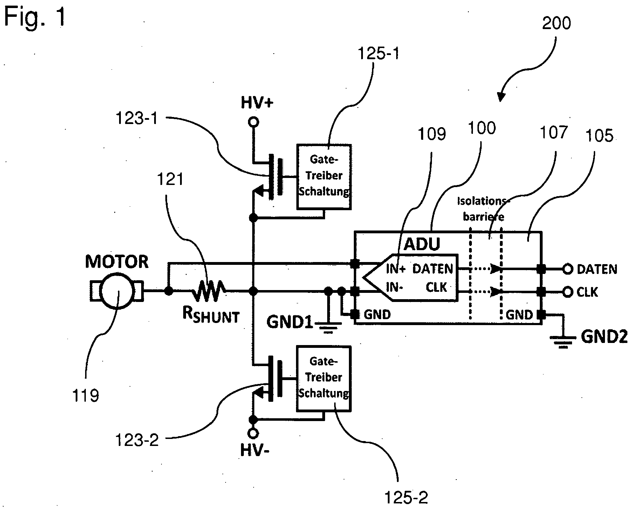

Fig. 1 zeigt eine schematische Ansicht einer Schaltungsanordnung 200 zum Messen eines Stromes in einer Motorsteueranwendung. Die Schaltungsanordnung 200 dient zum Ansteuern und Versorgen eines Elektromotors 119 mit elektrischer Energie. Die elektrische Schaltung 200 umfasst die Schaltelemente 123-1 und 123-2, die beispielsweise aus IGBTs gebildet sind und die Gerätetreiberschaltungen 125-1 und 125-2. Um die Motordrehzahl einzustellen wird der Elektromotor 119 mit einem PWM-Signal angesteuert. Dabei schalten die zwei Schaltelemente 123-1 und 123-2 den Eingang des Elektromotors 119 abwechselnd zwischen den Spannungen HV+ und HV-.

Weiter umfasst die Schaltungsanordnung 200 eine Umsetzeranordnung 100 zum Messen eines Stromes über eine Spannung, die an einem Shunt-Widerstand 121 abfällt. Der Strom, der in den Elektromotor 119 fließt, wird mit dem Shunt-Widerstand 121 in eine Spannung konvertiert und mit einem Analog-Digital-Umsetzer 109 digitalisiert, da digitale Signale störunempfindlicher sind und leichter übertragen werden können. Um die Anzahl der isolierten Signale zu minimieren, können Delta-Sigma ADUs eingesetzt werden, da diese lediglich jeweils eine Leitung für Daten (Bitstream) und Takt aufweisen.

Der Anschluss GND2 bildet ein Bezugspotential für die Auswerte- und Kontrollschaltungen auf einer Niederspannungsseite 105 der Umsetzeranordnung 100. Der Anschluss GND1 bildet ein Bezugspotenzial für den Analog-Digital-Umsetzer 100 auf einer Hochspannungsseite 103 der Umsetzeranordnung 100. Das Bezugspotential GND1 wird mit der Motorspannung mitgeschaltet und unterliegt schnellen Transienten. Zwischen der Hochspannungsseite 103 und der Niederspannungsseite 105 der Umsetzeranordnung 100 ist eine Isolationsbarriere 107 angeordnet, die eine galvanische Trennung über eine Isolationsstrecke hinweg bewirkt. Die digitalen Signale des Analog-Digital-Umsetzers 100 werden drahtlos mittels eines Senders auf der Hochspannungsseite und eines Empfängers auf der Niederspannungsseite über die Isolationsbarriere 107 hinweg übermittelt.

Die Komponenten der Umsetzeranordnung 100, insbesondere der Analog-Digital-Umsetzer 100, die Isolationsbarriere 107, der Sender und der Empfänger sind in ein Gehäuse integriert. Für die Übertragung der digitalen Signale zwischen dem Sender und dem Empfänger kann eine optische Übertragung mit einer Infrarotdiode und einer Photodiode, eine induktive Kopplung zwischen Sender und Empfänger, eine magnetische Kopplung mit einem Riesenmagnetowiderstandsensor (GMR-Sensor) oder eine kapazitive Kopplung zwischen Sender und Empfänger verwendet werden.

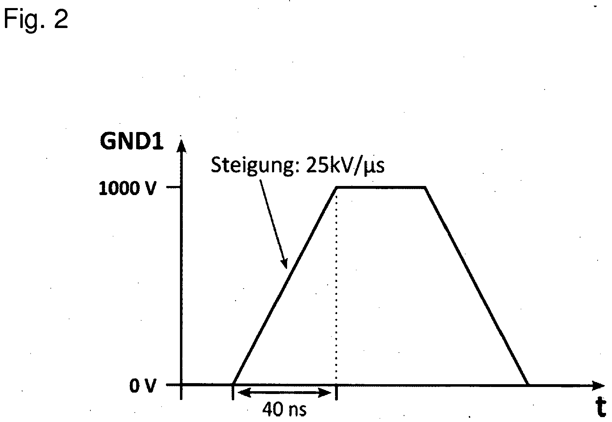

Fig. 2 zeigt ein Spannungsdiagramm einer Gleichtaktstörung am Anschluss GND1. Beim Schalten der Schaltelemente 123-1 und 123-2 wird der Anschluss GND1 zwischen den Spannungen HV+ und HV- geschaltet. Fig. 2 zeigt schematisch das zeitliche Verhalten am Anschluss GND1. In diesem Beispiel schalten die Schaltelemente zwischen 0V und 1000V in 40ns, so dass sich eine Steigung von 25kV/$\mu$s ergibt.

In diesem Fall sollte die Isolationsbarriere 107 eine Spannungsfestigkeit von mindestens 1000 V besitzen. Die Umsetzersignale des Analog-Digital-Umsetzers 109 sollten während dieser Gleichtaktstörung zuverlässig über die Isolationsbarriere 107 hinweg übertragen werden. Der maximale Anstieg der Transiente, bei der diese Daten noch zuverlässig übertragen werden, wird als Common Mode Transient Immunity (CMTI) bezeichnet und wird in der Einheit kV/$\mu$s angegeben.

Da die Schaltungen des Empfängers und des Senders im gleichen Gehäuse integriert sind, findet eine kapazitive Kopplung zwischen den beiden Anschlüssen GND1 und GND2 statt. Der Strom, der zwischen den beiden Anschlüssen GND1 und GND2 fließt, berechnet sich nach Formel 1 zu:

$$I_{CMT} = \frac{\Delta V}{\Delta t} C = \frac{25kV}{\mu s} \cdot 1pF = 25mA \qquad (1)$$

In diesem Beispiel fließen demnach kurzzeitig bis zu 25 mA. Durch die parasitären Koppeleffekte und interne Induktivität im Erdungspfad entstehen somit interne Störungen auf der Seite des Empfängers, die eine sichere Übertragung verhindern.

Die Schaltgeschwindigkeit der Schaltelemente 123-1 und 123-2 hat einen Einfluss auf die Effizienz des Elektromotors 119, so dass es technisch vorteilhaft ist, Schaltelemente 123-1 und 123-2 mit kürzeren Schaltzeiten zu verwenden. Ab einem bestimmten Wert verursacht die Gleichtaktstörung jedoch Übertragungsfehler in dem übermittelten Datensignal und/oder dem Taktsignal. Schnellere Schaltflanken der Schaltelemente 123-1 und 123-2 führen daher zu höheren Anforderungen an das CMTI. Werden die Umsetzersignale über die Isolationsbarriere 107 in redundanter Art und Weise übertragen, kann das CMTI signifikant verbessert werden und eine Fehlerunterdrückung bei der Übertragung durchgeführt werden.

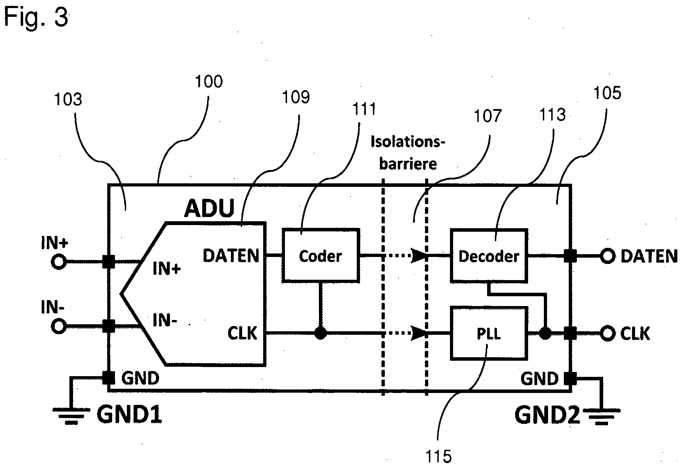

Fig. 3 zeigt ein Blockdiagramm einer Umsetzeranordnung 100. Die Umsetzeranordnung 100 umfasst einen Analog-Digital-Umsetzer 109 auf der Hochspannungsseite 103 zum Ausgeben eines Umsetzersignals als erstes Signal und einen Kodierer 111 auf der Hochspannungsseite 103 zum Kodieren des Umsetzersignals in ein redundante Kodierersignal als zweites Signal. Weiter umfasst die Umsetzeranordnung 100 eine in dem Kodierer 111 integrierte Sendeeinrichtung zum Senden des redundanten Kodierersignals über die Isolationsbarriere 107 und einen Dekodierer 113 mit einer intergierten Empfangseinrichtung zum Empfangen des über die Isolationsbarriere 107 gesendeten, redundanten Kodierersignals. In diesem Fall ist das Umsetzersignal ein erstes Signal und das Kodierersignal ein zweites redundantes Signal. Durch das redundante Kodierersignal können Übertragungsfehler erkannt und korrigiert werden, sodass die Ausgabesignale der Umsetzeranordnung 100 fehlerfrei sind.

Weiter umfasst die Umsetzeranordnung 100 auf der Hochspannungsseite 103 eine Sendeeinrichtung zum Senden eines Taktsignals CLK über die Isolationsbarriere 107. Der Takt CLK ist beispielsweise vorgesehen, um die Kodierersignale synchron zu verarbeiten. Falls einzelne Taktflanken fehlerhaft übertragen werden, können die aus den Kodierersignalen gewonnen Daten möglicherweise nicht mehr richtig zugeordnet werden.

Das Taktsignal kann jedoch auch von der Niederspannungsseite gesendet werden. Das ist beispielsweise der Fall, wenn der Analog-Digital-Umsetzer ADU mit einem externen Takt arbeitet. In diesem Fall wird das externe Taktsignal auf die Hochspannungsseite übertragen und mit der PLL auf der Hochspannungsseite rekonstruiert.

Daher umfasst die Umsetzeranordnung 100 auf der Niederspannungsseite 105 eine Regelschleife 115 zum Filtern des Taktsignals und zur Taktrückgewinnung. Da das Taktsignal ein periodisches Signal ist, können die Übertragungsfehler auf der Niederspannungsseite mit der Regelschleife 115 gefiltert werden. Die Regelschleife 115 umfasst beispielsweise eine Phasenregelschleife (Phase Locked Loop - PLL), die die Phasenlage über einen geschlossenen Regelkreis so beeinflusst, dass die Phasenabweichung möglichst minimal ist.

Wird das Taktsignal von der Niederspannungsseite gesendet, wie beispielsweise bei einem externen Taktsignal, ist die Regelschleife auf der Hochspannungsseite angeordnet. Im Allgemeinen ist die Regelschleife auf der Empfängerseite angeordnet.

Dabei wird das empfangene Kodierersignal mit einem Ausgang eines spannungsgesteuerten Oszillators (Voltage-Controlled Oscillators - VCO) verglichen. Die Differenz wird mit einem Schleifenfilter gefiltert und dazu verwendet, um den spannungsgesteuerten Oszillator anzusteuern. Dabei folgt das Ausgangssignal der Phasenregelschleife dem empfangenen Takt. Dadurch können einzelne Übertragungsfehler des Taktsignals durch den Schleifenfilter unterdrückt werden, um das Taktsignal mit der Phasenregelschleife zu rekonstruieren und die Übertragungsfehler zu eliminieren.

Im Allgemeinen können rein analoge als auch digitale Phasenregelschleifen verwendet werden. Zudem können Frequenzregelschleifen (Frequency Locked Loops - FLL), die eine Sonderform der Phasenregelschleifen darstellen, für die Taktrückgewinnung eingesetzt werden. Weiter ist es möglich, das Taktsignal nicht als getrenntes Signal zu übertragen, sondern den Takt in den Datenstrom des Kodierersignals zu kodieren, beispielsweise mittels eines Manchester-Codes.

Die digitalen Daten, die der Analog-Digital-Umsetzer 109 ausgibt, hängen von einer Eingangsspannung ab. Übertragungsfehler bei der Übertragung über die Isolationsbarriere 107 hinweg oder eine Kopplung der Bezugspotentiale können zu Fehlern in einem Ausgabesignal der Umsetzeranordnung 100 führen. Um derartige Übertragungsfehler zu erkennen und zu korrigieren, kann ein redundantes Kodierersignal erzeugt werden, indem redundante Bits oder Informationen in den Datenstrom eingefügt werden, beispielsweise mittels eines Hamming-Codes. Die Kodierung der von den Anlog-Digital Umsetzer 109 ausgegebenen Umsetzersignale in ein redundantes Kodierersignal übernimmt ein Kodierer 111 (Coder-Block) auf der Hochspannungsseite 103 (Senderseite).

Nach der Übertragung über die Isolationsbarriere 107 wird der Datenstrom, der durch das redundante Kodierersignal gebildet wird, auf der Niederspannungsseite (Empfängerseite) mithilfe des rekonstruierten Taktes von dem Dekodierer 113 dekodiert. Bei der Datenrückgewinnung werden Informationen des redundanten Kodierersignals dazu benutzt, um Fehler zu erkennen und zu korrigieren. Für das Generieren und Übertragen der redundanten Bits im Kodierersignal gibt es mehrere Möglichkeiten.

Ein Delta-Sigma ADU generiert beispielsweise am Ausgang in jeder Taktperiode ein Bit. Der so entstehende Bitstrom weist keine Unterbrechungen auf und wird kontinuierlich übertragen. Um zusätzliche Information zu übertragen, wird die Bitrate der Übertragungsschnittstelle des Kodierers 111 erhöht. Es gibt zwei Möglichkeiten dies zu erreichen.

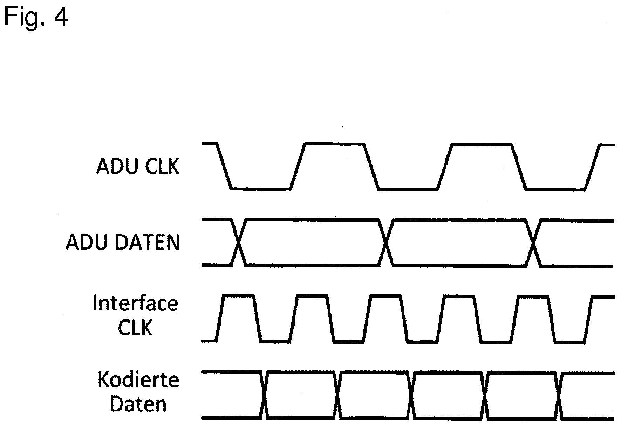

Fig. 4 zeigt ein Zeitdiagramm (Timing Diagram) für eine Datenübertragung mit einer doppelten Taktfrequenz der Schnittstelle. Bei einer Übertragung mit schnellerem Takt kann die zusätzliche Information mit einem schnelleren Schnittstellentakt übertragen werden. Die Daten am Ausgang des Digital-Analog-Umsetzers 109 ändern sich mit der fallenden Taktflanke des Taktsignals CLK und können mit der steigenden Taktflanke des Taktsignals übernommen werden.

Der Schnittstellentakt ist jedoch schneller, sodass mit jeder zweiten steigenden Flanke ein redundantes Bit übertragen werden kann und sich die Übertragungsbitrate verdoppelt. Im Allgemeinen sind jedoch auch andere Taktfrequenzen für den Schnittstellentakt möglich. Die Datenbits können bei einem schnelleren Schnittstellentakt auch mehr als zwei Mal übertragen werden.

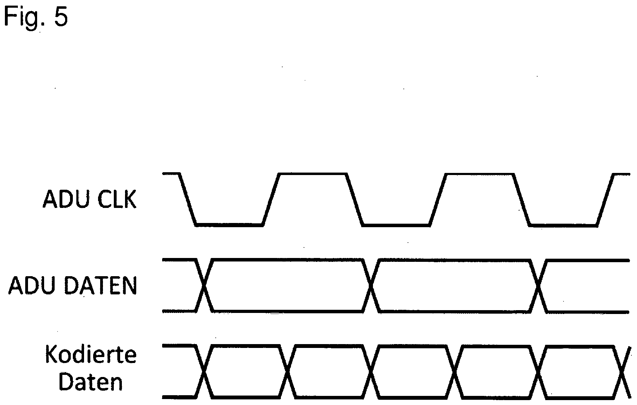

Fig. 5 zeigt ein Zeitdiagramm (Timing Diagram) für eine Datenübertragung mit jeder Taktflanke. Bei einem höheren Schnittstellentakt, können die Verlustleistung und die Schaltungskomplexität erhöht sein. Um diesen Umstand verhindern, können die Daten beispielsweise mit jeder der beiden Taktflanken, d.h. steigender und fallender Taktflanke, verarbeitet werden.

Dadurch verdoppelt sich die Übertragungsbitrate und jedes zweite Bit kann redundante Information enthalten. Die übertragenen Daten können auf der Niederspannungsseite (Empfängerseite) asynchron mit einem verzögerten Taktsignal verarbeitet werden. Dieses verzögerte Taktsignal kann durch ein analoges Verzögerungsglied, ein digitales Verzögerungsglied oder eine verzögerungsverriegelten Schleife (Delay-Locked Loop - DLL) eingestellt werden.

Bei einem CMTI von etwa 25 kV/$\mu$s kann ein Takt mit einer Frequenz von ca. 20 MHz verwendet werden. In diesem Fall wird alle 50 ns ein Bit übertragen. Für ein CMTI von mehr als 25 kV/$\mu$s bei 1000V Arbeitsspannung sollte die Transiente schneller als 40 ns sein, so dass nur jeweils ein Bit durch die Transiente gestört wird. Im Allgemeinen sind mehrere Kodierungsverfahren möglich.

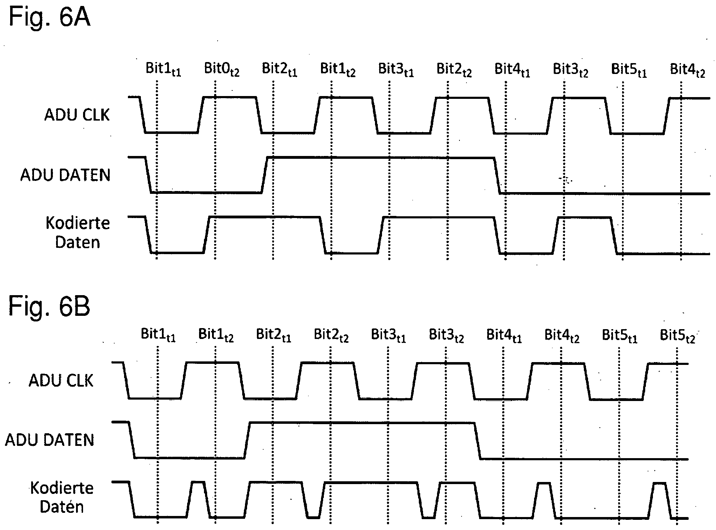

Fig. 6A zeigt ein Zeitdiagramm (Timing Diagram) für eine doppelte Übertragung mit einer Verzögerung von 1.5 Taktzyklen.

Die Gleichtaktstörung ist durch die Transiente zeitlich begrenzt und mit den bereits beschriebenen Übertragungsverfahren kann die Übertragungsbitrate des Kodierersignals verdoppelt werden. Dadurch ist es möglich, in dem Kodierersignal jedes Bit mit einer zeitlichen Verzögerung ein zweites Mal zu übertragen, sodass hierdurch ein redundantes Kodierersignal erzeugt wird. Die Verzögerung zwischen dem ersten und dem zweiten, zeitlich verzögerten Kodierersignal wird dabei so gewählt, dass die Transiente nur eine einzige Übertragung stören kann.

In diesem Beispiel wird jedes Bit zweimal mit einer Verzögerung von 1,5 Taktperioden übertragen. Es wird ein Bitmuster "01100" übertragen und die Isolationsbarriere 107 überträgt die digitalen Kodierersignale statisch. Dies ist zum Beispiel bei einer optischen Übertragung mit IR-Diode und Photodiode der Fall.

Bei einer Datenübertragung mittels einer kapazitiven Kopplung werden nur Signalflanken übertragen. Um Fehlübertragungen zu vermeiden, wird das redundante Bit dynamisch übertragen. Eine digitale "1" entspricht dann dem Übergang von "0" zu "1" und eine digitale "0" entspricht dem Übergang von "1" auf "0". Im Allgemeinen kann die Verzögerung von den redundanten Bits frei gewählt werden.

Fig. 6B zeigt ein Zeitdiagramm (Timing Diagram) für eine doppelte Übertragung mit einer Verzögerung von 0.5 Taktzyklen. In diesem Beispiel beträgt die Bitverzögerung 0.5 Taktperioden und die Übertragungsstrecke ist dynamisch. Auf der Niederspannungsseite (Empfängerseite) wird der Datenstrom in einem Schieberegister fortlaufend eingelesen.

Sobald beide redundante Bits empfangen worden sind, werden diese verglichen. Wenn das erste und das zweite Bit gleich sind, liegt kein Übertragungsfehler vor. In diesem Fall kann das erste oder das zweite Bit von der Umsetzeranördnung 100 ausgegeben werden. Wenn hingegen das erste und das zweite Bit unterschiedlich sind, liegt ein Übertragungsfehler vor. Wird zusätzlich der Zeitpunkt der Störung bestimmt, kann davon ausgegangen werden, dass dasjenige der beiden Bits fehlerhaft ist, das zum Zeitpunkt der Störung übertragen worden ist. Im Allgemeinen kann jedoch auch eine mehr als doppelte Übertragung von Datenbits im System erfolgen.

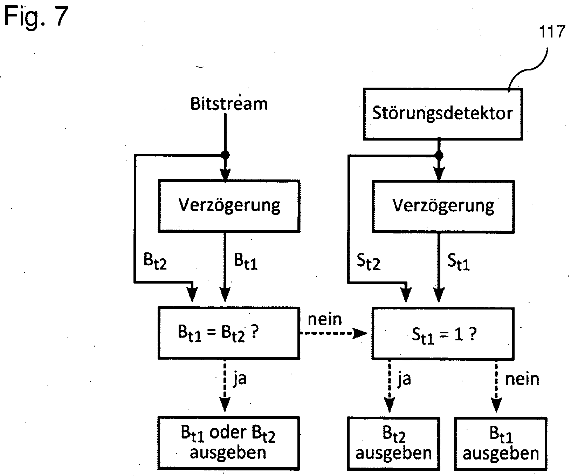

Fig. 7 zeigt ein Blockdiagramm eines Dekodierers 113 auf der Niederspannungsseite (Empfängerseite) für das Verfahren mit der doppelten Bitübertragung. Der Störungserfasser (Störungsdetektor) 117 umfasst beispielsweise eine Schaltung, die die Gleichtaktstörung zeitlich registriert und dient zur weiteren Korrektur der Übertragungsfehler.

Es gibt zumindest zwei Möglichkeiten den Störungserfasser 117 zu implementieren. In denjenigen Anwendungen, bei denen die Störung zu bekannten Zeiten auftritt, wie beispielsweise beim Schalten von Schaltelementen 123-1 und 123-2, kann die Störungsinformation als externes Signal zugeführt werden. Der Störungserfasser 117 kann jedoch auch direkt auf der gleichen integrierten Schaltung (IC) integriert werden.

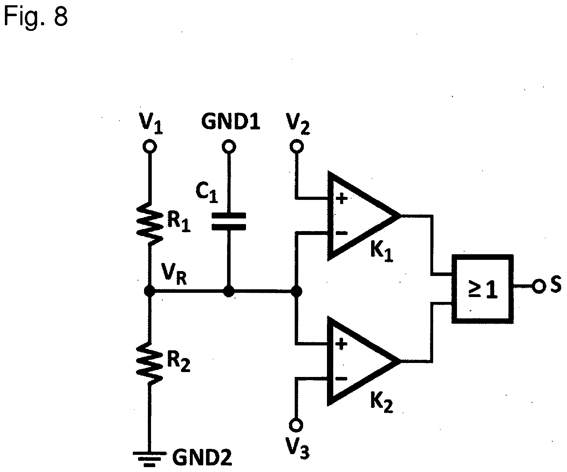

Fig. 8 zeigt eine mögliche Implementierung des Störungserfassers 117, der auf der Niederspannungsseite integriert werden kann. Die Widerstände R1, R2 setzen eine Gleichspannung VR an die Eingänge der zwei Komparatoren K1 und K2. Daneben wird den Komparatoren K1 und K2 die Spannung V2 und V3 zugeführt. Im Ruhezustand gilt für die Ruhespannung VR, dass V3>VR und V2<VR, sodass die Ausgänge der beiden Komparatoren K1 und K2 einen Wert von 0 ausgeben. Der gestörte Anschluss GND1 der Schaltungsanordnung 200 wird über eine Kapazität C1 auf die Knoten eingekoppelt, an dem die Gleichspannung VR anliegt. Während der Gleichtaktstörung fließt ein Strom $I_{C1}$ nach Formel 2 über die Kapazität C1 in den Knoten und sorgt für eine Spannungsänderung.

$$I_{C1} = \frac{\Delta GND1}{\Delta t} C_1 \qquad\qquad (2)$$

Bei einer positiven Störung gibt der Ausgang des Komparators K2 einen Wert von 1 aus. Wohingegen bei einer negativen Störung der Ausgang des Komparators K1 einen Wert von 1 ausgibt. Die Ausgänge der Komparatoren K1 und K2 sind mit einem Oder-Gatter verknüpft. In diesem Fall kann der Zeitpunkt der Störung bestimmt werden.

Im Allgemeinen kann statt einer doppelten Übertragung auch eine Kodierung mittels Kontrollbits erfolgen. Um Fehler zu erkennen und zu korrigieren, können in den Datenstrom von dem Kodierer 107 auch sogenannte Kontrollbits eingefügt werden. Diese Kontrollbits werden durch eine logische Verknüpfung von mehreren Datenbits erzeugt. Ein bekanntes Beispiel ist der Hamming-Code. Dieses Verfahren ist vor allem für Anwendungen geeignet, bei denen nicht ein Modulator-Bitstrom übertragen wird, sondern zu einem Block zusammengefasste digitale Wörter, wie beispielsweise der Ausgang von einem Analog-Digital-Umsetzer mit einem Sukzessivapproximationsregister (SAR-ADU).

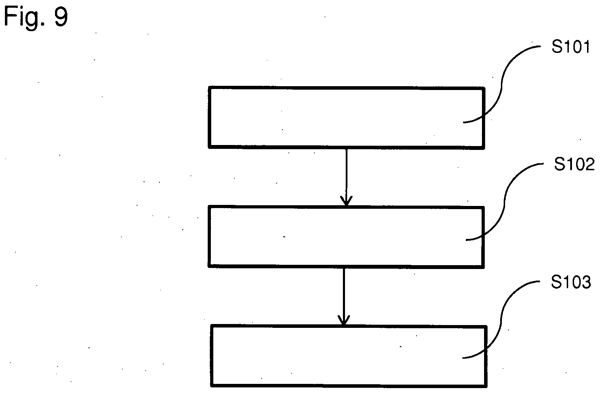

Fig. 9 zeigt ein Blockdiagramm des Verfahrens. Das Verfahren zum Umsetzen analoger Eingangssignale in digitale Daten mittels einer Umsetzeranordnung 100 mit einer ersten Seites 103 und einer zweiten Seite 105, die durch eine Isolationsbarriere (107) galvanisch voneinander getrennt sind, umfasst die Schritte eines Ausgebens S101 eines ersten Signals mittels eines Analog-Digital-Umsetzers 109 auf der ersten Seite 103; eines Kodierens S102 des ersten Signals in ein redundantes zweites Signal mittels eines Kodierers 111 auf der ersten Seite 103; eines Sendens S103 des redundanten zweiten Signals über die Isolationsbarriere 107 mittels einer Sendeeinrichtung 111 auf der ersten Seite 103; und eines Empfangens S104 des über die Isolationsbarriere 107 gesendeten, redundanten zweiten Signals mittels einer Empfangseinrichtung 113 auf der zweiten Seite 105. In weiteren Schritten wird das empfangene zweite Signal durch den Dekodierer 113 auf der zweiten Seite 105 dekodiert und ein Übertragungsfehler auf Basis des dekodierten, zweiten Signals korrigiert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

BEZUGSZEICHENLISTE

| | |
|---|---|
| 100 | Umsetzeranordnung |
| 103 | Hochspannungsseite |
| 105 | Niederspannungsseite |
| 107 | Isolationsbarriere |
| 109 | Analog-Digital-Umsetzer |
| 111 | Kodierer |
| 113 | Dekodierer |
| 115 | Phasenregelschleife |
| 117 | Störungserfasser |
| 119 | Motor |
| 121 | Shunt-Widerstand |
| 123-1 | Schaltelement |
| 123-2 | Schaltelement |
| 125-1 | Treiberschaltung |
| 125-2 | Treiberschaltung |
| S101-S104 | Verfahrensschritte |

**Patentansprüche**

1. Umsetzeranordnung (100) mit einer ersten Seite (103) und einer zweiten Seite (105), die durch eine Isolationsbarriere (107) galvanisch voneinander getrennt sind, mit:

   - einem Analog-Digital-Umsetzer (109) auf der ersten Seite (103) zum Ausgeben eines ersten Signals;
   - einem Kodierer (111) auf der ersten Seite (103) zum Kodieren des ersten Signals in ein redundantes zweites Signal;
   - einer Sendeinrichtung (111) auf der ersten Seite zum Senden des redundanten zweiten Signals über die Isolationsbarriere (107);
   - einer Empfangseinrichtung (113) auf der zweiten Seite zum Empfangen des über die Isolationsbarriere (107) gesendeten, redundanten zweiten Signals, **dadurch gekennzeichnet, daß** die Umsetzeranordnung
   - einen Störungserfasser (117) zum zeitlichen Erfassen einer Spannungsflanke an dem Analog-Digital-Umsetzer (109) umfasst.

2. Umsetzeranordnung (100) nach Anspruch 1, wobei der Kodierer (111) ausgebildet ist, ein redundantes zweites Signal zu erzeugen, das ein erstes Kodierersignal und ein gegenüber dem ersten Kodierersignal zeitversetztes zweites Kodierersignal umfasst.

3. Umsetzeranordnung (100) nach Anspruch 1, wobei der Kodierer (111) ausgebildet ist, das erste Signal mit einem fehlerkorrigierenden Code in ein redundantes zweites Signal zu kodieren.

4. Umsetzeranordnung (100) nach Anspruch 2, wobei die Umsetzeranordnung (100) eine Vergleichseinrichtung zum Vergleichen des ersten Kodierersignals und des zweiten Kodierersignals umfasst.

5. Umsetzeranordnung (100) nach einem der vorangehenden Ansprüche, wobei die Sendeinrichtung (111) und die Empfangseinrichtung (113) optisch, induktiv, magnetisch oder kapazitiv koppelbar sind.

6. Umsetzeranordnung (100) nach einem der vorangehenden Ansprüche, wobei die Sendeeinrichtung (111) eine Infrarotdiode und die Empfangseinrichtung (113) eine Photodiode umfasst.

7. Umsetzeranordnung (100) nach einem der vorangehenden Ansprüche, wobei die Sendeeinrichtung (111) eine Spule und die Empfangseinrichtung (113) einen Riesenmagnetowiderstandsensor umfasst.

8. Umsetzeranordnung (100) nach einem der vorangehenden Ansprüche, wobei der Analog-Digital-Umsetzer (109) einen Delta-Sigma-Modulator umfasst.

9. Umsetzeranordnung (100) nach einem der vorangehenden Ansprüche, wobei Umsetzeranordnung (100) auf der ersten Seite (103) oder der zweiten Seite () eine Taktsendeeinrichtung zum Senden eines Taktsignals über die Isolationsbarriere (107) umfasst.

10. Umsetzeranordnung (100) nach Anspruch 9, wobei die Umsetzeranordnung (100) auf der ersten Seite oder der zweiten Seite (105) eine Regelschleife (115) zum Filtern des Taktsignals umfasst.

11. Schaltungsanordnung (200) zum Erfassen einer Spannung mit einem Shunt-Widerstand und einer Umsetzeranordnung nach einem der Ansprüche 1 bis 10.

12. Verfahren zum Umsetzen analoger Eingangssignale in digitale Daten mittels einer Umsetzeranordnung (100) mit einer ersten Seites (103) und einer zweiten Seite (105), die durch eine Isolationsbarriere (107) galvanisch voneinander getrennt sind, mit den Schritten:

    - Ausgeben (S101) eines ersten Signals mittels eines Analog-Digital-Umsetzers (109) auf der ersten Seite (103);
    - Kodieren (S102) des ersten Signals in ein redundantes zweites Signal mittels eines Kodierers (111) auf der ersten Seite (103);
    - Senden (S103) des redundanten zweiten Signals über die Isolationsbarriere (107) mittels einer Sendeeinrichtung (111) auf der ersten Seite (103);
    - Empfangen (S104) des über die Isolationsbarriere (107) gesendeten, redundanten zweiten Signals mittels einer Empfangseinrichtung (113) auf der zweiten Seite (105), **gekennzeichnet durch** den Schritt:

- zeitliches Erfassen einer Spannungsflanke an dem Analog-Digital-Umsetzer (109) mittels eines Störungserfassers (117).

**13.** Verfahren nach Anspruch 12, mit dem Schritt eines Erzeugens eines redundanten zweiten Signals, das ein erstes Kodierersignal und ein gegenüber dem ersten Kodierersignal zeitversetztes zweites Kodierersignal umfasst.


**Claims**

**1.** Converter arrangement (100) having a first side (103) and a second side (105) which are galvanically isolated from one another by an isolation barrier (107), having:

- an analogue/digital converter (109) on the first side (103) for outputting a first signal;
- a coder (111) on the first side (103) for coding the first signal into a redundant second signal;
- a transmitting device (111) on the first side for transmitting the redundant second signal via the isolation barrier (107);
- a receiving device (113) on the second side for receiving the redundant second signal transmitted via the isolation barrier (107), **characterized in that** the converter arrangement comprises
- an interference recorder (117) for temporally recording a voltage ramp at the analogue/digital converter (109).

**2.** Converter arrangement (100) according to Claim 1, the coder (111) being configured to generate a redundant second signal which comprises a first coder signal and a second coder signal which has a time delay with respect to the first coder signal.

**3.** Converter arrangement (100) according to Claim 1, the coder (111) being configured to code the first signal into a redundant second signal using an error-correcting code.

**4.** Converter arrangement (100) according to Claim 2, the converter arrangement (100) comprising a comparison device for comparing the first coder signal and the second coder signal.

**5.** Converter arrangement (100) according to one of the preceding claims, the transmitting device (111) and the receiving device (113) being able to be optically, inductively, magnetically or capacitively coupled.

**6.** Converter arrangement (100) according to one of the preceding claims, the transmitting device (111) comprising an infrared diode and the receiving device (113) comprising a photodiode.

**7.** Converter arrangement (100) according to one of the preceding claims, the transmitting device (111) comprising a coil and the receiving device (113) comprising a giant magnetoresistance sensor.

**8.** Converter arrangement (100) according to one of the preceding claims, the analogue/digital converter (109) comprising a delta-sigma modulator.

**9.** Converter arrangement (100) according to one of the preceding claims, the converter arrangement (100) comprising, on the first side (103) or the second side (105), a clock transmitting device for transmitting a clock signal via the isolation barrier (107).

**10.** Converter arrangement (100) according to Claim 9, the converter arrangement (100) comprising, on the first side or the second side (105), a control loop (115) for filtering the clock signal.

**11.** Circuit arrangement (200) for recording a voltage, having a shunt resistor and a converter arrangement according to one of Claims 1 to 10.

**12.** Method for converting analogue input signals into digital data by means of a converter arrangement (100) having a first side (103) and a second side (105) which are galvanically isolated from one another by an isolation barrier (107), having the steps of:

- outputting (S101) a first signal by means of an analogue/digital converter (109) on the first side (103) ;
- coding (S102) the first signal into a redundant second signal by means of a coder (111) on the first side (103);

- transmitting (S103) the redundant second signal via the isolation barrier (107) by means of a transmitting device (111) on the first side (103);
- receiving (S104) the redundant second signal transmitted via the isolation barrier (107) by means of a receiving device (113) on the second side (105), **characterized by** the step of:
- temporally recording a voltage ramp at the analogue/digital converter (109) by means of an interference recorder (117).

**13.** Method according to Claim 12, having the step of generating a redundant second signal which comprises a first coder signal and a second coder signal which has a time delay with respect to the first coder signal.


**Revendications**

**1.** Dispositif de convertisseur (100) ayant un premier côté (103) et un second côté (105), qui sont séparés galvaniquement l'un de l'autre par une barrière d'isolation (107), comportant :

- un convertisseur analogique à numérique (109) sur le premier côté (103) pour émettre un premier signal ;
- un codeur (111) sur le premier côté (103) pour coder le premier signal en un deuxième signal redondant ;
- un dispositif d'émission (111) sur le premier côté pour émettre le deuxième signal redondant par l'intermédiaire de la barrière d'isolation (107) ;
- un dispositif de réception (113) sur le deuxième côté pour recevoir le deuxième signal redondant, émis par la barrière d'isolation (107), **caractérisé en ce que** le dispositif de convertisseur comprend
- un détecteur de perturbation (117) pour détecter temporellement une rampe de tension sur le convertisseur analogique à numérique (109).

**2.** Dispositif de convertisseur (100) selon la revendication 1, dans lequel le codeur (111) est conçu afin de générer un deuxième signal redondant, qui comprend un premier signal de codage et un deuxième signal de codage décalé temporellement par rapport au premier signal de codage.

**3.** Dispositif de convertisseur (100) selon la revendication 1, dans lequel le codeur (111) est conçu afin de coder le premier signal en un deuxième signal redondant avec un code de correction d'erreur.

**4.** Dispositif de convertisseur (100) selon la revendication 2, dans lequel le dispositif de convertisseur (100) comprend un dispositif de comparaison pour comparer le premier signal de codeur et le deuxième signal de codeur.

**5.** Dispositif de convertisseur (100) selon l'une quelconque des revendications précédentes, dans lequel le dispositif d'émission (111) et le dispositif de réception (113) peuvent être couplés de manière optique, inductive, magnétique ou capacitive.

**6.** Dispositif de convertisseur (100) selon l'une quelconque des revendications précédentes, dans lequel le dispositif d'émission (111) comprend une diode infrarouge et le dispositif de réception (113) comprend une photodiode.

**7.** Dispositif de convertisseur (100) selon l'une quelconque des revendications précédentes, dans lequel le dispositif d'émission (111) comprend une bobine et le dispositif de réception (113) comprend un capteur de magnétorésistance géante.

**8.** Dispositif de convertisseur (100) selon l'une quelconque des revendications précédentes, dans lequel le convertisseur analogique à numérique (109) comprend un modulateur delta-sigma.

**9.** Dispositif de convertisseur (100) selon une des revendications précédentes, dans lequel le dispositif de convertisseur (100) sur le premier côté (103) ou le deuxième côté (105) comprend un dispositif d'émission de synchronisation pour émettre un signal d'horloge par l'intermédiaire de la barrière d'isolation (107).

**10.** Dispositif de convertisseur (100) selon la revendication 9, dans lequel le dispositif de convertisseur (100) comprend sur le premier côté ou le deuxième côté (105) une boucle de régulation (115) pour filtrer le signal d'horloge.

**11.** Dispositif de circuit (200) pour détecter une tension avec une résistance de shunt et un dispositif de convertisseur selon l'une quelconque des revendications 1 à 10.

**12.** Procédé de conversion de signaux d'entrée analogiques en données numériques au moyen d'un dispositif de convertisseur (100) comportant un premier côté (103) et un deuxième côté (105), qui sont séparés galvaniquement l'un de l'autre par une barrière d'isolation (107), avec les étapes consistant à :

- émettre (S101) un premier signal au moyen d'un convertisseur analogique à numérique (109) sur le premier côté (103) ;
- coder (S102) le premier signal en un deuxième signal redondant au moyen d'un codeur (111) sur le premier côté (103) ;
- émettre (S103) le deuxième signal redondant par l'intermédiaire de la barrière d'isolation (107) au moyen d'un dispositif d'émission (111) sur le premier côté (103) ;
- recevoir (S104) le deuxième signal redondant, émis par l'intermédiaire de la barrière d'isolation (107) au moyen d'un dispositif de réception (113) sur le deuxième côté (105), **caractérisé par** l'étape consistant à :
- détecter temporellement une rampe de tension sur le convertisseur analogique à numérique (109) au moyen d'un détecteur de perturbation (117).

**13.** Procédé selon la revendication 12, comportant l'étape de génération d'un deuxième signal redondant, qui comprend un premier signal de codage et un deuxième signal de codage décalé temporellement par rapport au premier signal de codage.

Fig. 1

Fig. 2

Fig. 3

Fig. 4

ADU CLK

ADU DATEN

Interface
CLK

Kodierte
Daten

EP 2 787 704 B1

Fig. 5

ADU CLK

ADU DATEN

Kodierte
Daten

EP 2 787 704 B1

Fig. 6A

Fig. 6B

# Fig. 7

Bitstream

Störungsdetektor — 117

Verzögerung     Verzögerung

$B_{t2}$   $B_{t1}$     $S_{t2}$   $S_{t1}$

$B_{t1} = B_{t2}$ ? — nein → $S_{t1} = 1$ ?

ja                    ja          nein

$B_{t1}$ oder $B_{t2}$ ausgeben     $B_{t2}$ ausgeben     $B_{t1}$ ausgeben

EP 2 787 704 B1

Fig. 8

Fig. 9

EP 2 787 704 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110184675 A1
- US 20040161024 A1
- US 7675444 B1